# EUROPÄISCHE PATENTSCHRIFT

(11) **EP 1 418 999 B1**
(45) Veröffentlichungstag und Bekanntmachung des Hinweises auf die Patenterteilung: **26.10.2005**
(21) Anmeldenummer: 02797542.4
(22) Anmeldetag: 02.08.2002
(51) Int. Cl.: B01D 29/96, B01D 35/30

(54) **FILTERVORRICHTUNG**
FILTER DEVICE
DISPOSITIF FILTRANT

(30) Priorität: 31.08.2001 DE 10142774
(43) Veröffentlichungstag der Anmeldung: 19.05.2004
(73) Patentinhaber: HYDAC FILTERTECHNIK GMBH, 66280 Sulzbach/Saar (DE)
(72) Erfinder: HENNES, Stefan, 66540 Neunkirchen (DE); SAKRASCHINSKY, Michael, 66386 St. Ingbert (DE); MAURER, Patrik, 66280 Sulzbach (DE); SANN, Norbert, 66292 Rigelsberg (DE)
(74) Vertreter: Bartels & Partner
(86) Internationale Anmeldenummer: PCT/EP2002/008605
(87) Internationale Veröffentlichungsnummer: WO 2003/020398

(56) Entgegenhaltungen:
- EP-A- 1 093 840
- DE-A- 19 523 239
- GB-A- 841 603
- US-A- 5 643 448
- US-A- 6 139 739

## Beschreibung

Die Erfindung bezieht sich auf eine Filtervorrichtung mit den Merkmalen des Oberbegriffes des Patentanspruches 1.

Filtervorrichtungen dieser Art sind bekannt. Ein nicht unbedeutender Anteil der Herstellungskosten entfällt bei derartigen Filtervorrichtungen auf die Ausbildung der Halteeinrichtung zur lösbaren Fixierung des Filterelementes. Bei einer in der EP 0 891 214 B1 aufgezeigten Filtervorrichtung der eingangs genannten Art weist die Halteeinrichtung eine Federanordnung aus zwei einander entgegenwirkenden Druckfedern auf, durch deren resultierende Federkraft ein am Filterelement angeordnetes Endstück, das als Dicht- und Halteelement fungiert, auf ein gehäuseseitiges Halteelement aufgeschoben wird, das durch einen sich in das Stützrohr des Filterelements erstreckenden Stutzen am Kopf des Filtergehäuses gebildet ist.

Die verhältnismäßig aufwendige Bauweise der Halteeinrichtung führt zu hohen Herstellungskosten.

Durch die US-A-5 643 448 ist eine Filtervorrichtung bekannt mit einem Filterelement, das im topfartigen Filtergehäuse eingesetzt sich bodenseitig an einer Druckfeder abstützt. Am gegenüberliegenden Ende des Filterelementes ist eine Endkappe mit Führungsbahnen und Rastausnehmungen an der freien Oberseite vorgesehen, so daß beim axialen Einsetzen des Filterelementes in das topfartige Filtergehäuse und Drehen desselben um die Längsachse randseitig angeordnete und innen zur Längsachse diametral einander gegenüberliegende Nocken zunächst entlang den Führungsbahnen abgleiten können, um dann unter der Wirkung der Druckfeder in die Rastausnehmungen im Gehäusedeckel zu verrasten. Wird bei der bekannten Lösung das Filterelement ungewollt gegen die bodenseitige Druckfeder gedrückt, ist ein ungewolltes Lösen der Haltereinrichtung möglich, was die Betriebssicherheit beeinträchtigt. Ferner baut die bekannte Filtervorrichtung kompliziert auf und ist mithin teuer in der Herstellung.

Durch die US-A-6 139 739 ist eine gattungsgemäße Filtervorrichtung bekannt mit einem topfartigen Filtergehäuse, das eine Längsachse definiert längs deren ein Filterelement in das Filtergehäuse einsetzbar und aus diesem herausnehmbar ist und mit einer zum lösbaren Festlegen des Filterelementes im Filtergehäuse dienenden Haltereinrichtung, die an der Innenseite des Filtergehäuses und am Filterelement vorgesehene, miteinander zusammenwirkende erste und zweite Halteelemente aufweist, wobei zumindest die einen der Halteelemente eine zur Längsachse des Filtergehäuses konzentrische und zumindest einen Teil eines Gewindes mit Gewindesteigung bildende Gestalt besitzt, so daß das Filterelement nach Drehen um seine Längsachse durch eine formschlüssige Verbindung festgelegt ist. Bei der bekannten Filtervorrichtung sind die Teile des Gewindes mit Gewindesteigung entlang des Außenumfanges der unteren Endkappe des Filterelementes angeordnet und lassen sich in einer Schraub-Drehbewegung über zugeordnete Ausnehmungen als weitere Halteelemente in das untere Ende des topfartigen Filtergehäuses einsetzen. Auch bei dieser Lösung ist nicht ausgeschlossen, daß ungewollt durch eine entgegengesetzte Drehbewegung sich die aufgezeigte Haltereinrichtung in der Art einer Gewindeverbindung löst. Auch baut die bekannte Filtervorrichtung insgesamt wieder kompliziert auf, was deren Herstellkosten erhöht.

Ausgehend von dem genannten Stand der Technik stellt sich die Erfindung die Aufgabe, eine Filtervorrichtung der in Betracht stehenden Art zu schaffen, die sich durch eine einfache Bauweise der Haltereinrichtung für das Filterelement und durch dementsprechend niedrige Herstellungskosten auszeichnet, sowie eine hohe Betriebssicherheit aufweist.

Bei einer Filtervorrichtung der eingangs genannten Art ist diese Aufgabe erfindungsgemäß dadurch gelöst, daß als zweite Halteelemente mehrere, quer zur Längsachse des Filtergehäuses vorspringende Nocken vorgesehen sind und daß als erste, die Gewindesteigung aufweisende Halteelemente Nockenbahnen vorgesehen sind, in die die Nocken beim Einsetzen des Filterelementes in das Filtergehäuse einfahrbar sind. Hiermit läßt sich in einfacher Weise eine rasche Festlegemöglichkeit schaffen und über die Gewindesteigung läßt sich die Verbindung selbsthemmend auslegen, was die Betriebssicherheit erhöht. Unter Beibehalten der Vorteile einer sonst üblichen Schraubverbindung auf diesem Gebiet läßt sich dergestalt in kurzer Zeit mit geringem Kraftaufwand die genannte Verbindung über die Nocken und die Nockenbahnen herstellen und wieder lösen. Darüber hinaus ist die Ausrichtung der Verbindung weitgehend eindeutig, das heißt die Einbausituation des austauschbaren Filterelementes gegenüber dem Filtergehäuse ist ohne weiteres reproduzierbar. Durch Verdrehen des Filterelementes ist eine formschlüssige Verbindung zwischen Filterelement und Filtergehäuse hergestellt, was einer einfachen Bedienbarkeit zugute kommt.

Vorzugsweise sind die Nocken an der Innenseite des Filtergehäuses und die Nockenbahnen am Filterelement vorgesehen.

Wenn als Filterelement eine Filterpatrone vorgesehen ist, die ein vom Filtermaterial umgebenes, fluiddurchlässiges Stützrohr und eine an dessen dem Boden des topfartigen Filtergehäuses zugeordneten, bodenseitigen Ende befindliche, den Rand des Filtermaterials einfassende Endkappe aufweist, können die Nockenbahnen an dieser umfangsseitig ausgebildet sein.

Bei derartigen Ausführungsformen gestaltet sich die Herstellung der Filtervorrichtung besonders einfach und kostengünstig, wenn die Nocken an der Innenseite eines Ringkörpers ausgebildet sind, der im topfartigen Filtergehäuse in dessen Bodenbereich angebracht ist.

Nachstehend ist die Erfindung anhand eines in der Zeichnung dargestellten Ausführungsbeispiels im einzelnen erläutert.

Es zeigen:
- Fig.1: einen schematisch vereinfacht gezeichneten Längsschnitt eines Ausführungsbeispiels der Filtervorrichtung mit einer im Filtergehäuse befindlichen Filterpatrone;
- Fig.2: einen perspektivisch gezeichneten Längsschnitt nur des topfartigen Teils des Filtergehäuses des Ausführungsbeispiels ohne Gehäusedeckel, wobei lediglich eine bodenseitige Endkappe der im übrigen nicht gezeigten Filterpatrone im Filtergehäuse formschlüssig festgelegt ist;
- Fig.3: eine gegenüber Fig.1 und 2 in größerem Maßstab gezeichnete perspektivische Ansicht der Endkappe der Filterpatrone und
- Fig.4: eine Draufsicht eines im bodenseitigen Endbereichs des Filtergehäuses des Ausführungsbeispiels befestigten Ringkörpers mit nach einwärts vorstehenden, als Halteelemente dienenden Nocken.

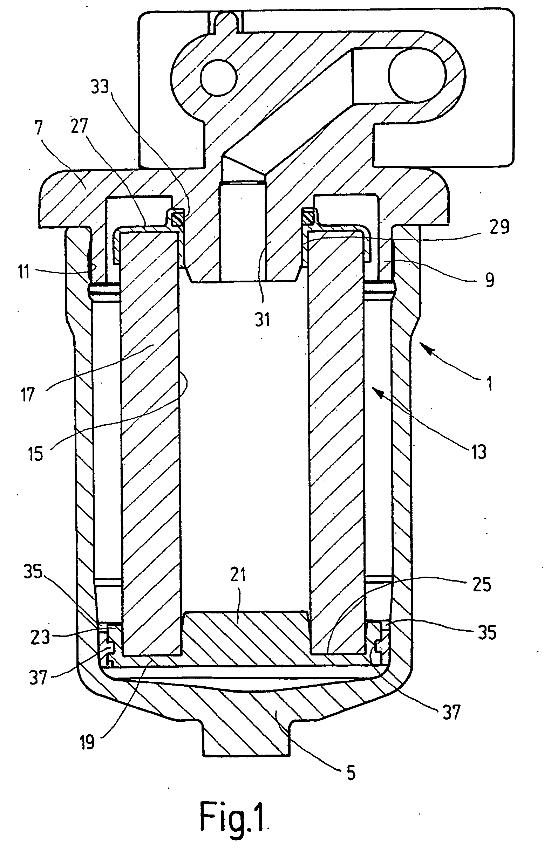

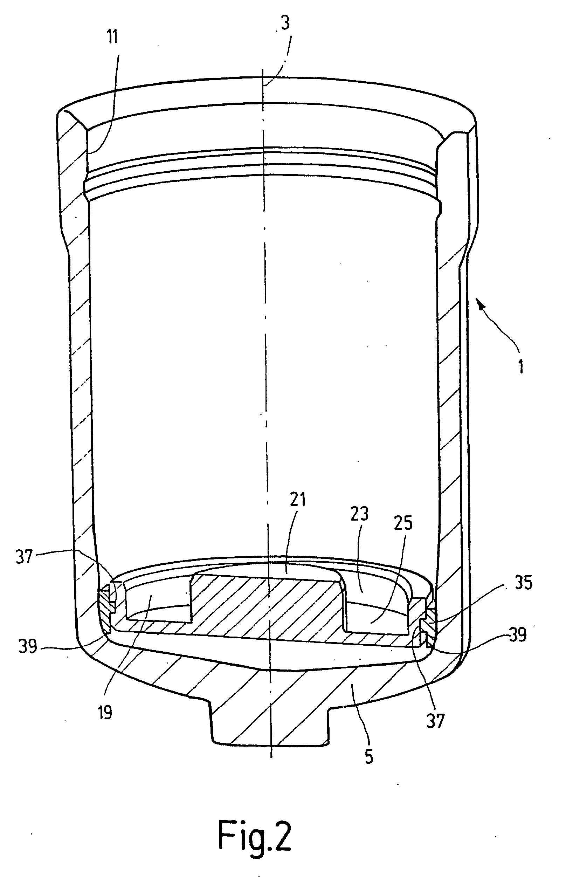

Gemäß Fig.1 und 2 weist das dargestellte und beschriebene Ausführungsbeispiel der Filtervorrichtung ein Filtergehäuse 1 in Form eines in seinem Umriß zu der Längsachse 3 rotationssymmetrischen Topfes auf, der einen geschlossenen Boden 5 und einen das gegenüberliegende, obere Ende verschließenden Gehäusedeckel 7 aufweist, der nur in Fig.1 eingezeichnet ist. Der Gehäusedeckel 7 weist an einem muffenartigen Fortsatz 9 ein Außengewinde auf, das mit einem Innengewinde 11 am oberen Ende des topfartigen Teils des Filtergehäuses 1 verschraubbar ist. Dichtelemente für die Abdichtung zwischen Gehäusedeckel 7 und topfartigem Teil des Filtergehäuses 1 sind in der schematischen Darstellung von Fig.1 nicht gezeigt.

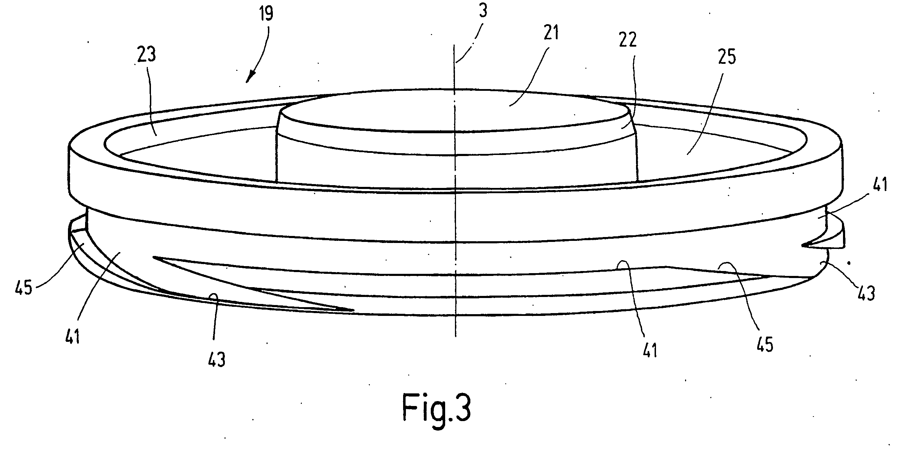

Im Filtergehäuse 1 ist eine zur Längsachse 3 konzentrische Filterpatrone 13 aufnehmbar, die in üblicher Weise ein inneres, fluiddurchlässiges Stützrohr 15 aufweist, das von Filtermaterial 17 umgeben ist. An dem dem Boden 5 des Filtergehäuses 1 zugewandten bodenseitigen Ende ist die Filterpatrone 13 durch eine Endkappe 19 abgeschlossen, welche eine Einfassung für den zugekehrten unteren Endrandbereich des Filtermaterials 17 bildet. Zu diesem Zweck weist die Endkappe 19 einen zentralen, kreiszylindrischen Zapfen 21 auf, der sich ins Innere des Stützrohres 15 der Filterpatrone 13 erstreckt und an seinem Endrand eine leichte Abschrägung 22 (Fig.3) aufweist. Zwischen der Außenseite des Zapfens 21 und dem radial äußeren, umfänglichen Mantel 23 der Endkappe befindet sich eine ringnutartige Vertiefung 25, in die der untere Endrand des Filtermaterials 17 eingreift.

Die Filterpatrone 13 weist am gegenüberliegenden, oberen Ende eine das Filtermaterial 17 und den Rand des Stützrohres 15 einfassende obere Kopfkappe 27 auf, welche eine Anschlußmuffe 29 bildet. Beim Aufschrauben des Gehäusedeckels 7 auf den topfartigen Teil des Filtergehäuses 1 kommt ein Stutzen 31, welcher einen Auslaß für gefiltertes Fluidum bildet, mit der Anschlußmuffe 29 in Eingriff, um die Fluidverbindung mit dem Innenraum des Stützrohres 15 herzustellen, wobei ein O-Ring 33 an der Anschlußmuf fe 29 den Innenraum der Filterpatrone (die Reinseite der Filtervorrichtung) gegenüber dem die Filterpatrone 13 umgebenden Raum des Filtergehäuses 1 (die Schmutzseite der Filtervorrichtung) abdichtet. Der Einlaß für das zu filtrierende Fluidum in das Filtergehäuse 1 ist in den Figuren nicht dargestellt.

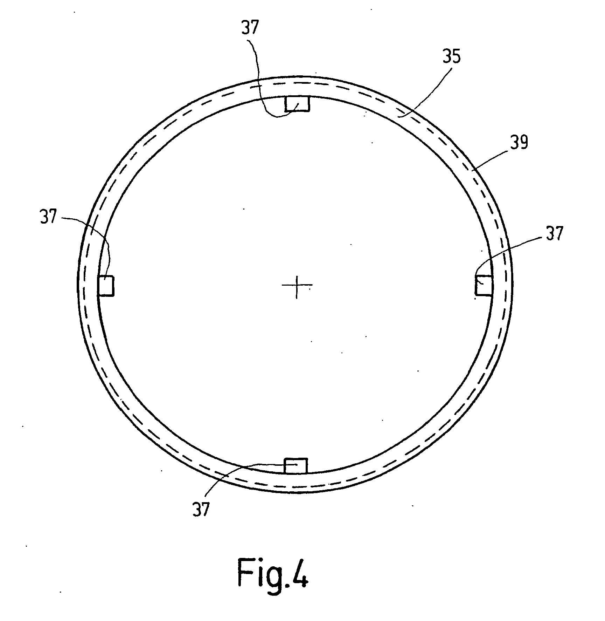

Der Aufbau der Halteeinrichtung zum lösbaren Festlegen der Filterpatrone 13 im Filtergehäuse 1 ist insbesondere aus den Fig.2 bis 4 ersichtlich. Die Halteeinrichtung weist der Filterpatrone 13 zugehörige erste Halteelemente und dem Filtergehäuse 1 zugehörige zweite Halteelemente auf. Die der Filterpatrone 13 zugehörigen Halteelemente befinden sich an der Endkappe 19. Die dem Gehäuse 1 zugeordneten Halteelemente befinden sich an einem im Filtergehäuse 1 in der Nähe von dessen Boden 5 befestigten Ringkörper 35, der in Fig.4 gesondert dargestellt ist. Wie aus dieser Figur deutlich zu ersehen ist, weist der Ringkörper 35 an seiner inneren Mantelfläche vier radial nach innen vorstehende, zapfenartige Nocken 37 auf, die um je 90° zueinander versetzt angeordnet sind. An dem dem Boden 5 des Filtergehäuses 1 zugekehrten Endrand weist der Ringkörper 35 umfangsseitig eine leichte Abrundung 39 auf, mit der der Ringkörper 35 an die leichte Wölbung der Innenwand des Filtergehäuses 1 im Bodenbereich angepaßt ist. Wie bereits angedeutet, ist der Ringkörper 35 im Filtergehäuse 1 durch Einpressen oder Einschweißen befestigt.

Die radial vorstehenden Nocken 37 des Ringkörpers 35 sind für den Eingriff mit Nockenbahnen 41 (siehe Fig.3) vorgesehen, die als der Filterpatrone 13 zugehörige Halteelemente an deren Endkappe 19 außenumfangsseitig ausgebildet sind. Diese Nockenbahnen 41 sind durch Vertiefungen gebildet, die in den Umfang des Mantels 23 eingearbeitet sind, wobei als Führung für jeden Nocken 37 je eine Nockenbahn 41 vorgesehen ist, so daß vier Nokkenbahnen 41 vorhanden sind. Jede dieser Nockenbahnen 41 bildet eine am unteren Endrand des Mantels 23 der Endkappe 19 offene Nut, wobei diese offenen Bereiche 43 der Nuten um je 90° zueinander versetzt sind, so daß beim Einsetzen der Filterpatrone 13 in das Filtergehäuse 1 die gehäuseseitig befestigten Nocken 37 in die offenen Bereiche 43 einfahren können. An diese offenen Bereiche 43 schließen sich bei jeder Nockenbahn 41 Bereiche 45 mit gewindeartiger Steigung an. Wird die Filterpatrone 13 nach dem Einfahren der Nocken 37 in die offenen Bereiche 43 der Nockenbahnen 41 um die Längsachse 3 verdreht, dann laufen die Nocken 37 über die Steigungsbereiche 45, d.h. die dadurch gebildeten Nockenrampen, wodurch eine in Axialrichtung wirkende Haltekraft an der Endkappe 19 der Filterpatrone 13 erzeugt wird, und zwar durch formschlüssigen Eingriff zwischen Nocken 37 und Nockenbahnen 41. Die so gebildete Verriegelung der Filterpatrone 13 durch Drehen um die Längsachse 3 in der einen Drehrichtung, kann auf einfache Weise gelöst werden, indem die Filterpatrone 13 im entgegengesetzten Drehsinn verdreht wird, um sie aus dem Filtergehäuse 1 wieder herauszunehmen. Wie am besten aus Fig.3 zu ersehen ist, gehen die Nockenbahnen 41 anschließend an ihren die Steigung aufweisenden, anfänglichen Bereich 45 in eine sich längs des gesamten Umfanges des Mantels 23 der Endkappe 19 erstreckende Nut über. Die Endkappe 19 in der dargestellten und.beschriebenen Ausgestaltung kann vorteilhafterweise aus einem Kunststoffwerkstoff preßgeformt sein. Der in der Vertiefung 25 innerhalb des Mantels 23 der Endkappe 19 aufgenommene Rand des Filtermaterials 17 kann mit der Endkappe 19 verklebt sein. Der ins Innere des Stützrohres 15 der Filterpatrone 13 vorspringende Zapfen 21 der Endkappe kann mit dem Stützrohr 15 ebenfalls verklebt sein.

Es versteht sich, daß anstelle der Verwendung von vier Nocken 37 und vier zugehörigen Nockenbahnen 41 eine andere Anzahl von Nocken und Nokkenbahnen vorgesehen sein kann, wobei vorzugsweise nicht weniger als drei Nocken und Nockenbahnen vorgesehen sind. Anstelle der gezeigten Gestaltung, bei der sich bei den Nockenbahnen 41 an den die Steigung aufweisenden, rampenartigen Bereich 45 ein Bereich ohne Steigung anschließt, könnten Nockenbahnen 41 mit durchgehender Steigung vorgesehen sein. Anstelle der beim dargestellten Ausführungsbeispiel gezeigten Ausbildung der Halteelemente als einzelne Nocken 37 könnte eine Gewindeverbindung zwischen Endkappe 19 und Filtergehäuse 1 mittels durchgehender Gewindeelemente nach Art einer Verschraubung mit umfänglich durchgehend ausgebildeten Innengewinde- und/oder Außengewindeelementen vorgesehen sein.

## Patentansprüche

1. Filtervorrichtung mit einem topfartigen Filtergehäuse (1), das eine Längsachse (3) definiert, längs deren ein Filterelement (13) in das Filtergehäuse (1) einsetzbar und aus diesem herausnehmbar ist, und mit einer zum lösbaren Festlegen des Filterelementes (13) im Filtergehäuse (1) dienenden Halteeinrichtung, die an der Innenseite des Filtergehäuses (1) und am Filterelement (13) vorgesehene, miteinander zusammenwirkende erste und zweite Halteelemente (41 bzw. 37) aufweist, wobei zumindest die einen (41) der Halteelemente eine zur Längsachse (3) des Filtergehäuses (1) konzentrische und zumindest einen Teil eines Gewindes mit Gewinde mit Gewindesteigung bildende Gestalt besitzen, so daß das Filterelement (13) nach Drehen um seine Längsachse (3) durch eine formschlüssige Verbindung festgelegt ist, **dadurch gekennzeichnet, daß** als zweite Halteelemente mehrere, quer zur Längsachse (3) des Filtergehäuses (1) vorspringende Nocken (37) vorgesehen sind und daß als erste, die Gewindesteigung aufweisende Halteelemente Nockenbahnen (41,45) vorgesehen sind, in die die Nocken (37) beim Einsetzen des Filterelementes (13) in das Filtergehäuse (1) einfahrbar sind.

2. Filtervorrichtung nach Anspruch 1, **dadurch gekennzeichnet, daß** die Nocken (37) an der Innenseite des Filtergehäuses (1) und die Nockenbahnen (41,45) am Filterelement (13) vorgesehen sind.

3. Filtervorrichtung nach Anspruch 2, **dadurch gekennzeichnet, daß** als Filterelement eine Filterpatrone (13) vorgesehen ist, die ein vom Filtermaterial (17) umgebenes, fluiddurchlässiges Stützrohr (15) und eine an dessen dem Boden (5) des topfartigen Filtergehäuses (1) zugeordneten, bodenseitigen Ende befindliche, den Rand des Filtermaterials (17) einfassende Endkappe (19) aufweist, an der die Nockenbahnen (41,45) umfangsseitig ausgebildet sind.

4. Filtervorrichtung nach Anspruch 3, **dadurch gekennzeichnet, daß** an der Innenwand des Filtergehäuses (1) in einer gemeinsamen Ebene liegende, zueinander um einen vorgebbaren Winkel versetzte, zapfenartige, radial nach innen vorspringende Nocken (37) für die Zusammenwirkung mit korrespondierend an der Endkappe (19) des Filterelementes (13) ausgebildeten Nockenbahnen (41,45) vorgesehen sind.

5. Filtervorrichtung nach Anspruch 4, **dadurch gekennzeichnet, daß** vier vorspringende Nocken (37) an der Innenwand des Filtergehäuses (1) um je 90° versetzt zueinander angeordnet sind, die mit vier korrespondierend angeordneten Nockenbahnen (41,45) zusammenwirken.

6. Filtervorrichtung nach Anspruch 4 oder 5, **dadurch gekennzeichnet, daß** die Nockenbahnen (41,45) an der Endkappe (19) durch bereichsweise (45) mit gewindeartiger Steigung verlaufende Nuten gebildet sind, die an Umfangsbereichen (43) der Endkappe(19), die um je einen vorgebbaren Winkel zueinander versetzt sind, am unteren Endrand der Endkappe (19) offen sind, so daß die Nocken (37) beim Einsetzen des Filterelementes (13) in das Filtergehäuse (1) in die Nuten einfahrbar sind.

7. Filtervorrichtung nach Anspruch 6, **dadurch gekennzeichnet, daß** die Nuten an vier Umfangsbereichen (43) der Endkappe (19) um je 90° zueinander versetzt angeordnet sind.

8. Filtervorrichtung nach einem der Ansprüche 2 bis 7, **dadurch gekennzeichnet, daß** die Nocken (37) an der Innenseite eines Ringkörpers (35) ausgebildet sind, der im topfartigen Filtergehäuse (1) in dessen Bodenbereich angebracht ist.

## Claims

1. Filter apparatus with a pot-like filter housing (1) defining a longitudinal axis (3), along which a filter element (13) can be inserted into and removed from the filter housing (1), and with a holding means serving for the disconnectable affixing of the filter element (13) within the filter housing (1), envisaged on the inside of the filter housing (1) and on the filter element (13), incorporating co-operating first and second holding elements (41, i.e. 37), whereby at least one (41) of the holding elements incorporates a shape that is concentric in relation to the longitudinal axis (3) of the filter housing (1) and forming at least a part of a thread with threads with ascending thread pattern, so that the filter element (13) is affixed by means of a positive connection following rotating the same around its longitudinal axis (3), **characterised in that** several cams (37) projecting across the longitudinal axis (3) of the filter housing (1) are envisaged to serve as second holding elements, and **in that** cam strips (41, 45) incorporating ascending thread patterns are envisaged as serving as the first holding elements, into which the cams (37) can be inserted during the inserting of the filter element (13) into the filter housing (1).

2. Filter apparatus according to Claim 1, **characterised in that** the cams (37) on the inside of the filter housing (1) and the cam strips (41, 45) are envisaged on the filter element (13).

3. Filter apparatus according to Claim 2, **characterised in that** a filter cartridge (13) incorporating a fluid-permeable support pipe (15) surrounded by filter material (17) is envisaged as the filter element (13), further incorporating an end cap (19) assigned to the floor (5) of the pot-like filter housing (1) on the floor side and enclosing the edge of the filter material (17), on the outer circumference of which the cam strips (41, 45) are formed.

4. Filter apparatus according to Claim 3, **characterised in that** spigot-shaped cams (37) projecting radially towards the inside are envisaged on the interior wall of the filter housing (1) along a common plane, and offset from one another by a pre-determinable angle, for co-operation with corresponding cam strips (41, 45) envisaged on the end cap (19) of the filter element (13).

5. Filter apparatus according to Claim 4, **characterised in that** four projecting cams (37) are located on the interior wall of the filter housing (1) offset from another by 90° each, which co-operate with four correspondingly arranged cam strips (41, 45).

6. Filter apparatus according to Claim 4 or 5, **characterised in that** the cam strips (41, 45) are formed by grooves in part (45) equipped with ascending threads on the end cap (19), which are each offset from one another by a pre-determinable angle around the circumference area (43) of the end cap (19), and which are open at the lower end edge of the end cap (19), so that the cams (37) can be inserted into the grooves during inserting of the filter element (13) into the filter housing (1).

7. Filter apparatus according to Claim 6, **characterised in that** the grooves are located within four circumference areas (34) of the end cap and are each offset from one another by 90°.

8. Filter apparatus according to one of the Claims 2 to 7, **characterised in that** the cams (37) are located on the inside of an annular body (35) which is positioned within the floor area of the pot-like filter housing (1).

## Revendications

1. Dispositif de filtrage avec un boîtier de filtrage (1) semblable à un pot, lequel définit un axe longitudinal (3) le long duquel un élément filtrant (13) peut être inséré dans le boîtier de filtrage (1) et enlevé de celui-ci, et avec un dispositif de retenue servant à la fixation amovible de l'élément filtrant (13) dans le boîtier de filtrage (1), dispositif qui comporte des premiers et des seconds éléments de retenue (41 et/ou 37) prévus côté intérieur du boîtier de filtrage (1) et à l'élément filtrant (13) et concourant les uns avec les autres, sachant qu'au moins les premiers (41) éléments de retenue possèdent une forme concentrique par rapport à l'axe longitudinal (3) du boîtier de filtrage (1) et formant au moins une partie d'un filet avec filet et pas de filetage, de telle sorte que l'élément filtrant (13) après rotation autour de son axe longitudinal (3) est fixé par le biais d'une liaison par conjugaison de formes, **caractérisé en ce que** plusieurs ergots (37) saillants en travers par rapport à l'axe longitudinal (3) du boîtier de filtrage (1) sont prévus comme seconds éléments de retenue et **en ce que** des voies à ergot (41, 45) sont prévues comme premiers éléments de retenue comportant le pas de filetage, voies dans lesquelles les ergots (37) peuvent être rentrés lors de l'introduction de l'élément filtrant (13) dans le boîtier de filtrage (1).

2. Dispositif de filtrage selon la revendication 1, **caractérisé en ce que** les ergots (37) sont prévus côté intérieur du boîtier de filtrage (1) et les voies à ergot (41, 45) à l'élément filtrant (13).

3. Dispositif de filtrage selon la revendication 2, **caractérisé en ce qu'**une cartouche filtrante (13) est prévue comme élément filtrant, laquelle comporte un tube support (15) perméable aux fluides et entouré par de la matière filtrante (17), et un capuchon d'extrémité (19) entourant le bord de la matière filtrante (17), situé côté fond à l'extrémité du tube support attribuée à la base (5) du boîtier de filtrage semblable à un pot, capuchon d'extrémité où sont réalisées les voies à ergot (41, 45) côté périphérie.

4. Dispositif de filtrage selon la revendication 3, **caractérisé en ce que** des ergots (37) saillants de manière radiale vers l'intérieur, semblables à des tenons, décalés les uns par rapport aux autres d'un angle pouvant être prédéterminé et situés dans un plan commun sont prévus pour le concours avec des voies à ergot (41, 45) réalisées de manière correspondante au capuchon d'extrémité (19) de l'élément filtrant (13).

5. Dispositif de filtrage selon la revendication 4, **caractérisé en ce que** quatre ergots (37) saillants sont disposés de manière décalée les uns par rapport aux autres de 90° chacun sur la paroi intérieure du boîtier filtrage (1), lesquels agissent conjointement avec quatre voies à ergot (41, 45) disposées de manière correspondante.

6. Dispositif de filtrage selon la revendication 4 ou 5, **caractérisé en ce que** les voies à ergot (41, 45) sont formées au capuchon d'extrémité (19) par des rainures passant en zones (45) avec un pas semblable à un filet, rainures qui sont ouvertes au bord inférieur terminal du capuchon d'extrémité (19) au niveau des zones périphériques (43) du capuchon d'extrémité (19), lesquelles sont décalées les unes par rapport aux autres d'un angle pouvant être prédéterminé, de telle sorte que les ergots (37) peuvent être rentrés dans les rainures lors de l'introduction de l'élément filtrant (13) dans le boîtier de filtrage (1).

7. Dispositif de filtrage selon la revendication 6, **caractérisé en ce que** les rainures sont disposées de manière décalée les unes par rapport aux autres de 90° chacune aux quatre zones périphériques (43) du capuchon d'extrémité (19).

8. Dispositif de filtrage selon l'une des revendications 2 à 7, **caractérisé en ce que** les ergots (37) sont réalisés côté intérieur d'un corps annulaire (35), lequel est disposé dans le boîtier de filtrage (1) semblable à un pot dans la zone du fond de celui-ci.
